# EUROPÄISCHE PATENTANMELDUNG

(11) **EP 3 323 283 A1**
(43) Veröffentlichungstag der Anmeldung: **23.05.2018**
(21) Anmeldenummer: 17201360.9
(22) Anmeldetag: 13.11.2017
(51) Int. Cl.: A01D 34/86

(54) **AUSLEGERARM SOWIE MIT EINEM SOLCHEN AUSLEGERARM AUSGESTATTETES AUSLEGER-ARBEITSGERÄT**

(30) Priorität: 18.11.2016 DE 102016122229
(71) Anmelder: MULAG Fahrzeugwerk Heinz Wössner GmbH & Co. KG, 77728 Oppenau (DE)
(72) Erfinder: HEINZMANN, Thomas, 77709 Oberwolfach (DE)
(74) Vertreter: Weickmann & Weickmann PartmbB

(57) **Zusammenfassung**

Dieser dreiteilige Auslegerarm (3) weist eine neue Relation der Längen (L1, L2, L3) der einzelnen Armteile (3.1, 3.2, 3.3) zueinander auf, die sowohl ein Übergreifen hoher Hindernisse (99) ohne allzu hohes Aufragen des Auslegerarmes (3) darüber hinaus gestattet, als auch eine sehr kompakte Transportstellung in Querrichtung vor der Fahrzeugfront, was beides begünstigt wird durch die beiden Querfortsätze (3.1a, 3.2a) einzelner Armteile (3.1, 3.2) des Auslegerarmes (3).

## Beschreibung

### I. Anwendungsgebiet

Die Erfindung betrifft ein Ausleger-Arbeitsgerät und dessen Auslegerarm, wie er auf einem Trägerfahrzeug montiert eingesetzt wird und an dem äußeren Ende des Auslegerarmes ein Arbeitsgerät, beispielsweise einen Mähkopf zum Mähen des Randbereiches neben einer Straße, trägt.

### II. Technischer Hintergrund

Dabei muss - im Arbeitseinsatz - das freie äußere Ende des Auslegerarmes, also der dort befestigte Arbeitskopf oder Mähkopf, jede beliebige Stellung innerhalb seines maximalen Arbeitsbereiches anfahren können, wobei jedoch im Arbeitseinsatz auftretende Hindernisse zu berücksichtigen sind, insbesondere im Arbeitseinsatz zwischen dem Trägerfahrzeug und dem Arbeitskopf aufragende Hindernisse, wie etwa ein Verkehrsschild oder eine neben der Straße verlaufende Leitplanke.

Gleichzeitig werden die geforderten maximalen Ausleger-Längen immer größer.

Ein weiteres Problem ist die Transportstellung eines solchen Auslegerarmes und Ausleger-Arbeitsgerätes, denn das Trägerfahrzeug soll ja mit dem in einer Transportstellung abgelegten Arbeitsgerät auf öffentlichen Straßen fahren können, sodass also vor allem seitliche Überstände gering gehalten oder völlig vermieden werden müssen.

Ein derartiges Arbeitsgerät ist häufig an der Front eines Trägerfahrzeuges befestigt. Dann kann als Transportstellung der Auslegerarm von seiner vorderen Befestigungsbasis am Trägerfahrzeug etwa in Fahrtrichtung nach hinten über die Fahrerkabine hinweg verlaufend abgelegt werden, wobei dann in aller Regel der am freien Ende des Auslegerarmes befestigte Arbeitskopf, insbesondere Mähkopf, auf der Ladefläche hinter der Fahrerkabine abgelegt wird.

Häufig trägt ein solches Trägerfahrzeug jedoch nicht nur einen, sondern zwei solcher Arbeitsgeräte mit Auslegerarm, von denen das eine an der Front des Trägerfahrzeuges befestigt ist, das andere am Heck oder auf der Ladefläche, meist hinter der Fahrerkabine, sodass dann häufig die nach hinten gerichtete Transportstellung für das vordere Arbeitsgerät nicht mehr verfügbar ist. Vielmehr muss dann das vordere Arbeitsgerät in einer Transportstellung vor der Front des Trägerfahrzeuges abgelegt werden, in der dann die einzelnen Anteile des Auslegerarms in Querrichtung vor der Fahrzeugfront angeordnet werden.

Aus diesen Gründen umfasst ein solcher Auslegerarm inzwischen meist nicht nur zwei, sondern drei oder gar mehr gelenkig miteinander verbundene Armteile, da hierdurch
- bei Ausnutzen der Länge eines Armteiles bis zur Breite des Trägerfahrzeuges für die vordere Transportstellung größere Ausleger-Reichweiten realisierbar sind als mit nur zwei Armteilen und
- auch hohe Hindernisse, wie etwa Verkehrsschilder, problemlos übergriffen werden können, selbst wenn seitlich außerhalb dieses Hindernisses der Randbereich stark nach unten abfällt.

In diesem Zusammenhang ist aus der EP 2 213 156 A1 ein solches Ausleger-Mähgerät bekannt, bei dem der Auslegerarm drei gelenkig miteinander verbundene Armteile umfasst, wovon das mittlere am kürzesten ausgebildet ist und dazu dient, im Arbeitseinsatz den Querbereich über ein hoch aufragendes Hindernis wie etwa ein Verkehrsschild hinweg zu überspannen. Das äußerste, den Mähkopf tragende, Armteil ist dabei teleskopierbar ausgestaltet.

In der Quer-Transportstellung des Auslegerarmes in einer aufrecht stehenden Querebene vor dem Trägerfahrzeug verlaufen dann das erste und letzte Armteil eher horizontal, während das mittlere Armteil aufrecht, quasi vertikal stehend, positioniert ist.

Das freie Ende des Auslegerarmes befindet sich dabei relativ weit außerhalb der Längsmitte des Trägerfahrzeuges, selbst wenn die Befestigungsbasis des Auslegerarmes am Trägerfahrzeug - die bei solchen Auslegerarbeitsgeräten in der Regel in Querrichtung verfahrbar ist, meist als Verschiebeschuh entlang einer in Querrichtung verlaufenden Versatzschiene ausgebildet ist - möglichst weit an das eine Ende dieser Versatzschiene verfahren wird.

Da der Auslegerarm jedoch in der Regel mittig am Arbeitskopf oder Mähkopf angreift, ragt dann in der Transportstellung der Mähkopf seitlich über die Außenkante des Trägerfahrzeuges hinaus.

### III. Darstellung der Erfindung

### a) Technische Aufgabe

Es ist daher die Aufgabe gemäß der Erfindung, ein Ausleger-Arbeitsgerät mit einem dafür verwendbaren Auslegerarm zur Verfügung zu stellen, der möglichst alle in diesem Zusammenhang bestehenden Schwierigkeiten überwindet und dennoch einfach und kostengünstig herzustellen ist.

### b) Definitionen:

Zunächst sei vorausgeschickt, dass in der vorliegenden Anmeldung die Armteile in ihrer Reihenfolge vom freien äußeren Ende, also vom Arbeitskopf her, als erstes, zweites, drittes, viertes Armteil bezeichnet sind.

Als Armteile des Auslegerarmes gelten nur diejenigen Teile, die für die durchgängige mechanische Verbindung von der Befestigungs-Basis, in der Regel dem Schiebeschuh, zum Arbeitskopf notwendig sind.

Die Umlenkhebel und Umlenkhebel-Paare an den Gelenk-Verbindungsstellen zwischen benachbarten Armteilen sind somit keine Armteile, da sie
- für eine solche durchgängige mechanische Verbindung nicht zwingend benötigt werden
   und/oder
- die Umlenkhebel eine maximale Erstreckung besitzen, die geringer als 25 %, besser geringer als 20 %, der Länge des kürzesten Armteiles, gemessen zwischen dessen beidseitigen Schwenkachsen, sind.

Ein Gelenk kann prinzipiell jede Art von gelenkiger Verbindung mit beliebig vielen Freiheitsgraden zwischen zwei Armteilen sein, vorzugsweise handelt es sich jedoch um eine Schwenkachse, die also nur einen einzigen Freiheitsgrad besitzt, wobei vorzugsweise die, insbesondere alle, Schwenkachsen zwischen den Armteilen parallel zueinander ausgerichtet sind.

Die erwähnte Gelenk-Abstandsrichtung soll diejenige Richtung eines Armteiles sein, die durch die die Mittelpunkte der beiden Gelenke - insbesondere Schwenkachsen, dann betrachtet in Richtung der Schwenkachsen - an den beiden Enden jedes Armteiles, an denen das jeweils nächste benachbarte Armteil beweglich befestigt ist, definiert wird.

Die erwähnte Haupt-Erstreckungsrichtung der einzelnen Armteile soll diejenige Richtung sein, in welcher das jeweilige Armteil seinen größten geraden Verlauf besitzt. Bei insgesamt gerade verlaufenden Armteilen kann somit die Haupt-Erstreckungsrichtung identisch sein mit der Gelenk-Abstandsrichtung.

Die erwähnte Länge eines Armteiles, die in der Gelenk-Abstandsrichtung gemessen wird, ist der Abstand zwischen den beiden Gelenken - insbesondere Schwenkachsen, dann betrachtet in Richtung der Schwenkachsen - an den beiden Enden jedes Armteiles, an denen jeweils das nächste benachbarte Armteil beweglich befestigt ist.

Der erwähnte Zwischenwinkel zwischen zwei Armteilen soll derjenige Winkel sein, den die beiden benachbarten Schenkel eines von Gelenk zu Gelenk des Auslegerarmes verlaufenden Polygonzuges, die sich an einem Gelenk, insbesondere einer Schwenkachse, zwischen diesen beiden benachbarten Armteilen treffen, zueinander einnehmen.

Sofern an einer Stelle nur ein Mähkopf erwähnt sein sollte, bedeutet dies, dass diese Aussage in aller Regel auch für alle anderen Arbeitsköpfe und damit Arbeitsgeräte gelten soll, wie etwa einen Bürstenkopf.

### c) Lösung der Aufgabe

Diese Aufgabe wird durch die Merkmale der Ansprüche 1 und 10 gelöst. Vorteilhafte Ausführungsformen ergeben sich aus den Unteransprüchen.

Hinsichtlich des Auslegerarmes wird diese Aufgabe dadurch gelöst, dass zumindest das dritte Armteil, vorzugsweise auch das zweite Armteil, des Auslegerarmes eine größere Länge besitzt als das erste Armteil.

Mittels dieser Konstruktion wird durch den relativ kurzen ersten Armteil relativ zum dritten Armteil, insbesondere zu den beiden anderen Armteilen, primär die Positionierbarkeit des Arbeitskopfes im Arbeitseinsatz, insbesondere gegenüber dem ersten Armteil, verbessert. Die Höhendifferenz, die beim Übergreifen eines hohen Hindernisses bewältigt werden muss, wird auf der Au-ßenseite des Hindernisses primär durch das zweite Armteil bewältigt, weshalb dieses vorzugsweise auch teleskopierbar ausgebildet ist.

Bei der bekannten Lösung ist dagegen dieses zweite Armteil sehr kurz ausgebildet und soll lediglich die Querdistanz über das zu übergreifende Hindernis hinweg überwinden, damit - wie bisher vor allem bei zweiteiligen Auslegerarmen - der in Form eines umgekehrten V aufgerichtete Auslegerarm nicht zu hoch über das Hindernis aufragen muss.

Der weitere Vorteil dieses kurzen, ersten, äußersten Armteiles besteht darin, dass es in der Quer-Transportstellung dazu benutzt werden kann, den daran befestigten Arbeitskopf mittig unterhalb der gegeneinander geklappten Armteile zu positionieren und damit etwa mittig vor der Front des Trägerfahrzeuges.

Die beanspruchten Längenrelationen gelten bei einem teleskopierbaren Armteil immer für die vollständig zusammengefahrene, also eingefahrene, Teleskopstellung.

Vorzugsweise ist das dritte Armteil somit das längste Armteil, dessen Ende lediglich dadurch begrenzt ist, dass es quer vor dem Trägerfahrzeug anordenbar sein muss, ohne die zulässigen seitlichen Überstände zu überschreiten.

Das zweite Armteil kann ebenfalls die in der zusammengeklappten Quer-Transportstellung vorhandene Breite - unter Berücksichtigung des durch die anderen Armteile verbrauchten Breitenbereiches - voll ausnutzen und muss dadurch nicht wesentlich kürzer sein als das dritte Armteil.

Falls ein Armteil teleskopierbar ist, so ist dies vorzugsweise das zweite Armteil, um dadurch möglichst große, hohe Hindernisse, selbst bei einem dahinter seitlich außen abfallenden Untergrund, übergreifen zu können.

Vorzugsweise weist der Auslegerarm - in der Reihenfolge vom ersten zum dritten Armteil - nach dem dritten Armteil noch einen vierten Armteil auf, der einerseits mit der Befestigungsbasis des Auslegerarmes und andererseits mit dem Rest des Auslegerarmes gelenkig verbunden ist, und der vorzugsweise ebenfalls kürzer ist als der dritte Armteil, insbesondere auch als der zweite Armteil und insbesondere sogar kürzer als der erste Armteil.

Dieser vierte Armteil, der gelenkig mit der Befestigungsbasis verbunden ist, bietet den Vorteil, dass das Stellglied, insbesondere der Arbeitszylinder, zum Verschwenken des dritten Armteiles relativ nah zu dem Gelenk, insbesondere der Schwenkachse, zwischen dem dritten und vierten Armteil angeordnet werden kann, und der Arbeitszylinder dadurch weniger störend im Arbeitseinsatz ist als bei einem weiter vom Gelenk weg angreifenden, dann wesentlich längeren, Arbeitszylinder. Zusätzlich liegt ein solcher Arbeitszylinder im zusammengeklappten Zustand, also in der Quer-Transportstellung, des Auslegerarmes fast parallel zu dem vierten Armteil, umso paralleler, je kleiner der spitze Zwischenwinkel zwischen dem dritten und vierten Armteil ist.

Dieser kurze vierte Armteil bietet weiterhin den Vorteil, dass in dieser Quertransportstellung dieser kurze vierte Armteil im Wesentlich aufrecht steht, gegebenenfalls leicht geneigt nach oben außen bezüglich des Trägerfahrzeuges, und dadurch der daran befestigte dritte Armteil in einer solchen Höhe etwa horizontal verlaufend oberhalb der Befestigungsbasis positioniert ist, dass darunter ausreichend Platz für die Unterbringung des ersten und zweiten Armteiles verbleibt.

Dabei ist der zweite Armteil etwa parallel unterhalb dem dritten Armteil und der erste Armteil etwa parallel unterhalb des zweiten Armteils angeordnet, und unterhalb dieser drei Armteile und in der Regel auch unterhalb der Höhe der Befestigungsbasis der Arbeitskopf sich in Querrichtung erstreckend gehalten.

In diesem Zusammenhang wird unter "parallel" und "horizontal" verstanden, dass die betreffenden Armteile mit ihrer Gelenk-Abstandsrichtung von der Parallelität zueinander bzw. horizontalen Lage um nicht mehr als 20 Grad, vorzugsweise nicht mehr als 15 Grad, vorzugsweise nicht mehr als 10 Grad abweichen.

Ein weiteres erfindungswesentliches Merkmal - welches auch unabhängig von den zuvor beschriebenen Merkmalen, insbesondere den Längenverhältnissen der Armteile und deren Winkelstellungen in der Transportstellung zueinander - von Bedeutung ist, ist die Tatsache, dass wenigstens eines der Armteile einen quer zu seiner Haupt-Erstreckungsrichtung abstrebenden Querfortsatz aufweist.

Durch diesen Querfortsatz, an dessen freien Ende oder in dessen freien Endbereich sich das Gelenk, insbesondere die Schwenkachse, zum Befestigen des benachbarten Armteiles befindet, müssen im maximal zusammengefalteten Zustand die beiden in der Haupt-Erstreckungsrichtung verlaufenden Hauptstreben der beiden benachbarten Armteile nicht unbedingt einen spitzen Winkel zueinander einnehmen, sondern können parallel zueinander angeordnet werden mit einem Abstand zueinander.

Dies ist einerseits für die zusammengeklappte Quertransportstellung von großem Vorteil, vor allem aber kann mit Hilfe eines solchen Querfortsatzes die notwendige Überbrückung eines zu übergreifenden Hindernisses in Querrichtung realisiert werden, ohne dass der Auslegerarm dabei sehr weit nach oben über das Hindernis vorsteht.

Vorzugsweise weist das dritte Armteil an seinem äußeren Ende, und/oder das zweite Armteil an seinem inneren Ende, einen solchen Querfortsatz auf.

Insbesondere ragt dieser Querfortsatz in Richtung desjenigen der beiden einander sich zu 360° ergänzenden Zwischenwinkel zwischen dem zweiten und dritten Armteil ab, der den kleineren Winkel einnehmen kann, also bezüglich des in der Arbeitsstellung durch die Gelenke, insbesondere die Schwenkachsen, zwischen den Armteilen definierten Polygonzuges nach innen.

Denn die Verbindungen zwischen den einzelnen Armteilen sind so gestaltet, dass der sich von einem Gelenk, insbesondere einer Schwenkachse, zum nächsten erstreckende Polygonzug, und die sich etwa entlang dessen erstreckenden Armteile sich in aller Regel nicht über einen Schwenkwinkel von mehr als 180-Grad verschwenken können, vorzugsweise mit Ausnahme der Verbindung des ersten zum zweiten Armteil, bei dem dieses erste Armteil über die gestreckte Lage, also den 180-Grad-Zwischenwinkel hinweg, verschwenkbar ist und das erste Armteil bezüglich des zweiten Armteiles einen Schwenkwinkel von mindestens 185° Grad, besser mindestens 195°, überstreichen kann.

Vorzugsweise weist das zweite Armteil an seinem äußeren Ende, und/oder das erste Armteil an seinem inneren Ende, einen solchen Querfortsatz auf.

Insbesondere ragt auch dieser Querfortsatz in Richtung desjenigen der beiden einander sich zu 360° ergänzenden Zwischenwinkel zwischen dem zweiten und ersten Armteil ab, der den kleineren Winkel einnehmen kann, also in diesem Fall bezüglich des in der Arbeitsstellung durch die Gelenke, insbesondere die Schwenkachsen, zwischen den Armteilen definierten Polygonzuges nach außen.

Analog ist das Gelenk, insbesondere die Schwenkachse, insbesondere zwischen dem ersten und zweiten Armteil, in dem Endbereich des von einer Hauptstrebe abragenden Querfortsatzes angeordnet.

Dadurch kann dieses erste Armteil in der zusammengeklappten Quertransportstellung mit seiner in dessen Haupt-Erstreckungsrichtung verlaufenden Hauptstrebe sogar exakt parallel zu der Hauptstrebe des zweiten Armteiles positioniert werden.

Dieser Querfortsatz ist dann - bezüglich des sich von der Befestigungsbasis bis zum Arbeitskopf erstreckenden Polygonzuges über die einzelnen Gelenke hinweg - nach außen weisend angeordnet.

Als Stellelemente zum Verstellen des Zwischenwinkels zwischen den einzelnen Armteilen sind vorzugsweise Arbeitszylinder wie etwa Hydraulikzylinder vorhanden, die mit je einem Ende an einem der beiden relativ zueinander zu verschwenkenden Armteile angreifen, selbstverständlich jeweils exzentrisch zu der Schwenkachse zwischen diesen beiden Armteilen an diesen angreifen.

Hinsichtlich eines Arbeitsgerätes wird die eingangs gestellte Aufgabe dadurch gelöst, dass der von dem Arbeitsgerät umfasste Auslegerarm die vorbeschriebenen Merkmale erfüllt.

Vorzugsweise umfasst das Arbeitsgerät eine in Querrichtung verlaufende Versatzschiene, entlang deren ein Arm-Verschiebeschuh auch während des Arbeitseinsatzes gesteuert verfahrbar ist, an dem der Auslegerarm befestigt ist, der die Befestigungsbasis für den Auslegerarm und den daran befestigten Arbeitskopf darstellt.

Bei einem an einem Trägerfahrzeug befestigten Arbeitsgerät ist diese Versatzschiene in Querrichtung zur Fahrtrichtung etwa horizontal verlaufend entweder vor der Front des Trägerfahrzeuges oder auf einer Ladefläche, insbesondere hinter der Fahrerkabine, oder am Heck des Trägerfahrzeuges angeordnet.

### d) Ausführungsbeispiele

Eine Ausführungsform gemäß der Erfindung ist im Folgenden beispielhaft näher beschrieben. Es zeigen jeweils ein an der Front eines Trägerfahrzeuges 100 befestigtes Arbeitsgerät 1, welches einen Ausleger 3 umfasst, in dieser Reihenfolge in Frontansicht, Aufsicht und Seitenansicht auf das Trägerfahrzeug in den
- **Figuren 1a - c:**: in einer ersten Arbeitsstellung mit geringem seitlichem Abstand des Arbeitskopfes zum Trägerfahrzeug,
- **Figuren 2a - c:**: in einer zweiten Arbeitsstellung mit mittlerem seitlichen Abstand des Arbeitskopfes zum Trägerfahrzeug,
- **Figuren 3a - c:**: in einer dritten Arbeitsstellung mit einem großen seitlichen Abstand des Arbeitskopfes zum Trägerfahrzeug,
- **Figuren 4a - c:**: in einer ersten Transportstellung des Arbeitsgerätes mit nach hinten abgelegtem Auslegerarm,
- **Figuren 5a - c:**: in einer zweiten Transportstellung, in der das Arbeitsgerät quer vor der Front des Trägerfahrzeuges zusammengefaltet ist.

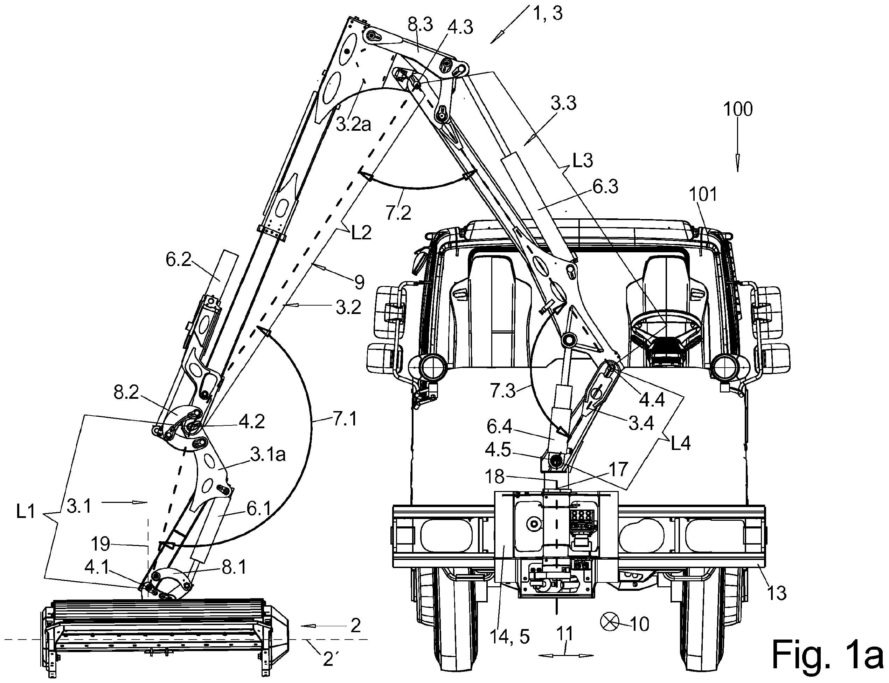

In den **Figuren 1a** **- c** ist eine erste Arbeitsstellung des Arbeitsgerätes 1 dargestellt, in der sich der Arbeitskopf 2, insbesondere ein Mähkopf 2, in dessen Inneren eine Messerwelle rotiert, in geringem Abstand seitlich neben dem Trägerfahrzeug 100 positioniert ist und auf dem Untergrund aufliegt.

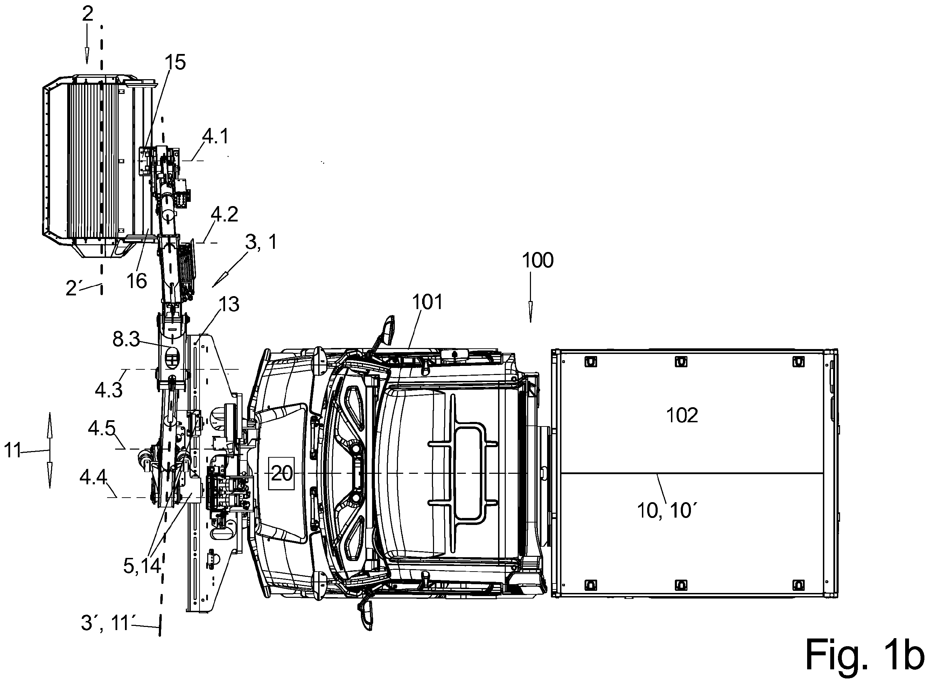

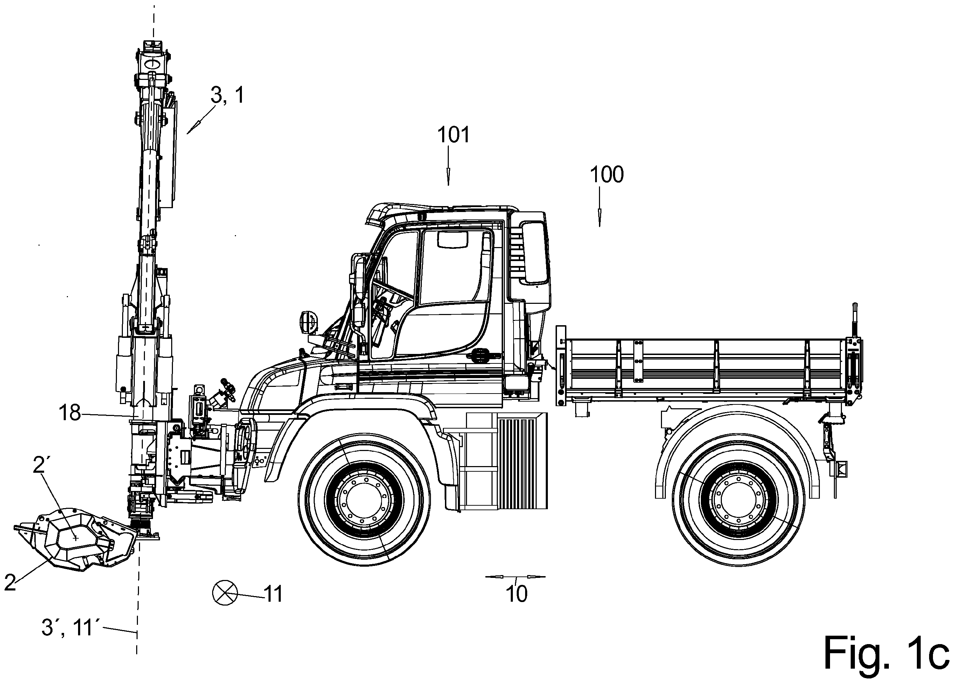

Wie am besten in der Aufsicht der **Figur 1b** und der Seitenansicht zur Fahrtrichtung 10, also in Blickrichtung der Querrichtung 11, in **Figur 1c** zu erkennen, ist zur Halterung des Arbeitsgerätes 1 am Trägerfahrzeug 100 vor der Front des Trägerfahrzeuges 100 eine Versatzschiene 13 montiert, die etwa horizontal in Querrichtung 11 verläuft, und entlang der ein Schiebeschuh 14 in Querrichtung 11 verfahrbar, insbesondere auch während des Arbeitseinsatzes gesteuert verfahrbar, ist, der den gesamten Auslegerarm 3 trägt und damit die Befestigungsbasis 5 für den Auslegerarm 3 bildet.

Wie vor allem **Figur 1b** in der Aufsicht erkennen lässt, erstreckt sich der - in der Frontansicht der **Figur 1a** sich etwa entlang einem durch die Schwenkachsen 4.1 - 4.5 zwischen den Armteilen 3.1-3.4 sowie dem Schiebeschuh 14 definierten Polygonzug 9 erstreckende - Auslegerarm 3 in einer etwa in Querrichtung 11 verlaufenden, aufrechten Querebene 11', die jedoch um die Befestigungsbasis 5, also den Verschiebeschuh 14 herum, um eine aufrechte Achse 17 geringfügig verschwenkt werden kann. Konkret dient dabei als Befestigungsbasis 5 ein vom Verschiebeschuh 14 nach oben aufragender Befestigung-Zapfen 18 an dem das innere Ende des Auslegerarmes 3 um die aufrechte Achse 17 verschwenkbar befestigt ist.

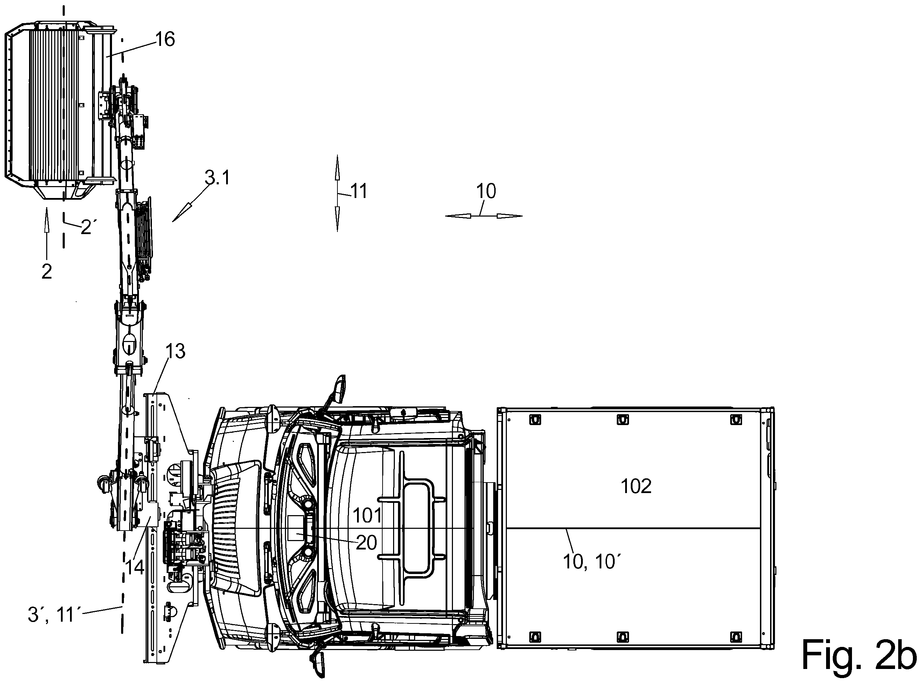

Das äußere, freie Ende des Auslegerarmes 3 greift in der Haupt-Erstreckungsrichtung 2' des Arbeitskopfes 2 etwa mittig am Arbeitskopf 2 an, ist dort jedoch vorzugsweise nicht in der Haupt-Erstreckungsrichtung 2' fix befestigt:
Vielmehr ist der Auslegerarm 3 an einem Kopf-Schiebeschuh 15 befestigt, der in der Haupt-Erstreckungsrichtung 2' des Arbeitskopfes 2 - die, wie **Figur 1b und 2b** zeigen, im Arbeitseinsatz meist etwa parallel zur Querrichtung 11 verläuft - manuell verstellbar, insbesondere verschiebbar, ist entlang einer Kopf-Führung 16, die in der Haupt-Erstreckungsrichtung 2' des Arbeitskopfes 2 verläuft.

Die Kopf-Führung 16 befindet sich in der Regel am in Fahrtrichtung 10 hinteren Ende des Arbeitskopfes 2. Meist ist der Kopf-Schiebeschuh 15 an der Kopf-Führung 16 verklemmt, und kann nach Lösen der Klemmschrauben in die gewünschte Position verschoben und neu verklemmt werden Die Kopf-Führung 16 ist dabei am hinteren Ende des Arbeitskopfes 2 ausgebildet, der sich damit in Fahrtrichtung 10 vor dem freien äußeren Ende des Auslegerarmes 3 befindet, wie am besten alle Aufsichten auf das Arbeitsgerät zeigen.

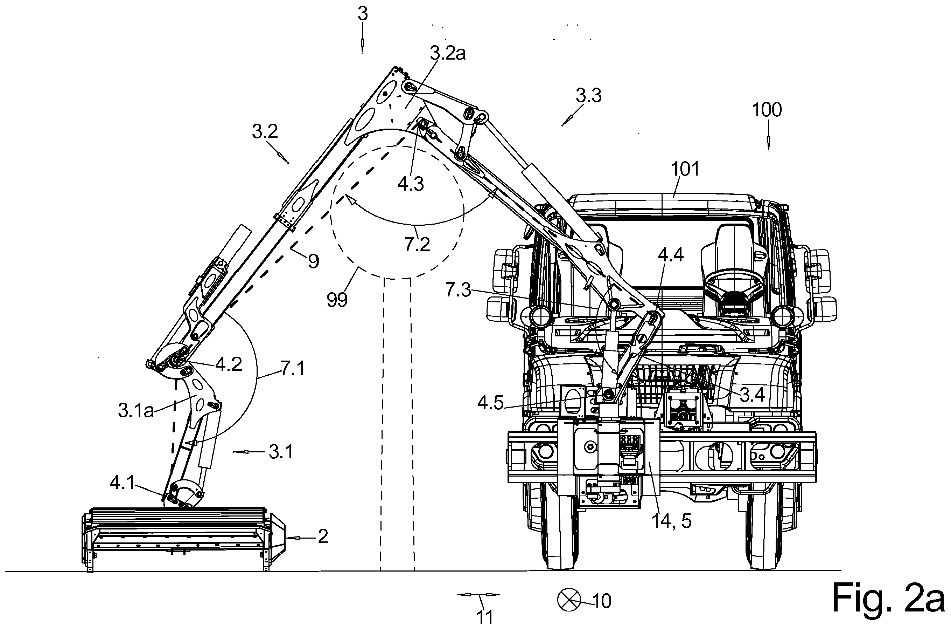

Die erfindungswesentlichen Merkmale sind am Auslegerarm 3 am besten in **Figur 1a** und in den übrigen Frontansichten der **Figuren 2a****,** **3a****,** **4a****,** **5a** zu erkennen:
Der Auslegerarm 3 setzt sich aus mehreren Armteilen 3.1, 3.2, 3.3, 3.4 zusammen, die jeweils gelenkig um eine Schwenkachse 4.1 bis, 4.5 miteinander sowie am äußeren und inneren Ende des Auslegerarmes 3 mit dem Arbeitskopfes 2 einerseits und der Befestigungs-Basis 5 andererseits verbunden sind. Die Armteile 3.1, 3.2, 3.3, 3.4 untereinander sind in der Regel nur um je eine dieser Schwenkachsen 4.2 - 4.4 relativ zueinander verschwenkbar, so dass sich der Auslegerarm 3 - unabhängig von dem momentanen Zwischenwinkel zwischen den einzelnen Armteilen - in einer Armebene 3' erstreckt, die beispielsweise in der Arbeitsstellung in Querrichtung 11 verläuft und eine Quer-Ebene 11' ist, und zumindest die Schwenkachsen 4.2 - 4.4 zwischen den Armteilen lotrecht zu dieser Armebene 3' verlaufen. Als Stellelemente, die die Winkelstellung zwischen den auf diese Weise gelenkig miteinander verbundenen Teilen, insbesondere Armteilen, einstellen und verändern, dient je ein Arbeits-Zylinder 6.1 - 6.4, in diesem Fall Hydraulikzylinder, die beanstandet zu diesen Schwenkachsen an den einzelnen Armteilen gelenkig befestigt sind.

Konkret ist am Arbeitskopf 2 über eine erste Schwenkachse 4.1, die in der Arbeitsstellung etwa in Fahrtrichtung 10 verläuft, das äußere, vordere Ende des ersten Armteiles 3.1 befestigt. In diesem Fall ist der Arbeitskopfes 2 zusätzlich über eine zu der erste Schwenkachse 4.1 quer verlaufende, in der Arbeitsteilung aufrecht stehende, Kopf-Achse 19 verschwenkbar.

Das innere, basisseitige, Ende des ersten Armteiles 3.1 ist mit dem äußeren , kopfseitigen, Ende eines zweiten, teleskopierbaren Armteiles 3.2 gelenkig um eine zweite Schwenkachse 4.2 verschwenkbar.

Das erste Armteil 3.1 ist - betrachtet auf die Armebene 3' wie etwa in **Figur 1a** **-** gekröpft ausgebildet mit einer im Wesentlichen geraden, in der Haupt-erstreckungsrichtung dieses ersten Armteiles 3.1 verlaufenden Hauptstrebe und einer am inneren, hinteren freien Ende in Form eines Quer-Fortsatzes 3.1 a, der von der Hauptstrebe aus bezüglich des Polygonzuges 9, der durch die einzelnen Schwenkachsen 4.1 bis 4.5 zwischen den einzelnen Armteilen definiert wird, nach außen abstrebt.

Die zweite Schwenkachse 4.2, an der das äußere Ende des nächsten, zweiten Armteiles 3.2 angreift, befindet sich im freien Endbereich dieses Querfortsatzes 3.1 a.

Der zwischen dem ersten Armteil 3.1 und dem Arbeitskopfes 2 wirkende Arbeitszylinder 6.1 ist bezüglich des insbesondere teilkreis-förmigen Polygonzuges 9 auf der Innenseite des ersten Armteiles 3.1 angeordnet, und/oder auf der der Befestigungsbasis 5 zugewandten Seite dieses ersten Armteiles 3.1.

Der zwischen dem ersten Armteil 3.1 und dem zweiten Armteil 3.2 wirkende Arbeitszylinder 6.2 ist auf der der Befestigungsbasis 5 abgewandten Seite, also der Außenseite, des zweiten Armteiles 3.2 angeordnet.

Das zweite Armteil 3.2 ist ebenfalls gekröpft ausgebildet, und zwar mit einer Kröpfung am inneren, hinteren Ende in Form eines Querfortsatzes 3.2a, der zur Innenseite hin, also von der geraden, in diesem Fall teleskopierbaren, Hauptstrebe dieses Armteiles 3.2 aus in Richtung der Befestigungsbasis 5 des Auslegerarmes und/oder ins Innere des in der Arbeitsstellung teilkreis-förmigen Polygonzuges 9 hin ab ragt.

Die Schwenkachse 4.3, an der das äußere Ende des nächsten, dritten Armteiles 3.3 angreift, befindet sich im freien Endbereich dieses Querfortsatzes 3.2a.

Der dritte Arbeitszylinder 6.3, der die Schwenkstellung zwischen dem zweiten und dem dritten Armteil 3.2, 3.3 verändert bzw. einstellt, verläuft etwa parallel zu dem dritten Armteil 3.3 auf dessen Außenseite, also der von der Befestigungsbasis 5 und/oder dem Inneren des Polygonzuges 9 abgewandten Seite dieses Armteiles 3.3 und ist mit seinem hinteren Ende an diesem dritten Armteil 3.3 befestigt.

Am inneren, hinteren Ende des dritten Armteils 3.3 ist das vierte Armteil 3.4 über eine vierte Schwenkachse 4.4 gelenkig befestigt.

Das innere, hintere Ende des vierten Armteils 3.4 ist über eine fünfte Schwenkachse 4.5 gelenkig mit der Befestigungs-Basis 5, in diesem Fall dem von dem Schiebeschuh 14 nach oben aufragenden Befestigungs-Fortsatz 18, verbunden.

Zusätzlich ist entweder dieses vierte Armteil 3.4 auch um eine etwa in der Vertikalen 12 verlaufende, aufrechte Achse 17 gegenüber diesem Befestigungs-Fortsatz 18 verschwenkbar oder der Befestigungs-Fortsatz 18 ist gegenüber dem Schiebeschuh 14 um eine solche aufrechte Achse 17 verschwenkbar.

Der vierte Arbeitszylinder 6.4, der die Schwenkstellung zwischen dem dritten Armteil 3.3 und dem vierten Armteil 3.4 verändert oder konstant hält, greift - beanstandet zu der vierten Schwenkachse 4. 4. dazwischen - mit seinem einen Ende am dritten Armteil 3.3 und mit seinem anderen Ende am vierten Armteil 3.4 an, dort vorzugsweise direkt an der fünften Schwenkachse 4.5, über die das vierte Armteil 3.4 an dem Schiebeschuh 14, insbesondere einem davon nach oben aufragenden Befestigungs-Fortsatz 18, verschwenkbar ist.

Im Gegensatz dazu sind die übrigen Arbeitszylinder 6.1 - 6.3 nur jeweils mit einem ihrer Enden gelenkig direkt an einem der Anteile 3.1 - 3.3 befestigt, mit ihrem jeweils anderen Ende dagegen jeweils an einem Paar von Umlenkhebel-Paar 8.1 - 8.3 gelenkig befestigt:
Diese Umlenkhebel-Paare 8.1 - 8.3 bestehen aus je zwei jeweils V-förmig angeordneten und gelenkig miteinander verbundenen meist sichelförmigen, Umlenkhebeln, wobei der jeweilige Arbeitszylinder 6.1 - 6.3 außerhalb oder direkt an der Gelenkverbindungsstelle zwischen den beiden Umlenkhebeln eines Paares an diesem gelenkig befestigt ist, während die Umlenkhebel mit ihrem jeweils anderen, nicht gegeneinander befestigten, Ende an je einem der beiden benachbarten, gelenkig miteinander verbundenen Bauteile, insbesondere Armteile, zum Beispiel 3.1 und 3.2, angreifen, so dass die betreffende Schwenkachse, zum Beispiel die Schwenkachse 4.2, sich im Freiraum zwischen den beiden V-förmig angeordneten Umlenkhebeln dieses Paares befindet.

Diese Umlenkhebel-Paare 8.1 - 8.3 dienen dazu, einen größeren Schwenkwinkel zwischen den beiden gelenkig miteinander verbundenen Bauteilen (Arbeitskopfes 2 und erstes Anteil 3.1) oder den Armteilen 3.1, 3.2 bzw. 3.2,3.3 bewirken zu können, als bei direkter Befestigung des entsprechenden Endes des Arbeits-Zylinders 6.1, 6.2, 6.3 an dem entsprechenden Armteil 3.1, 3.2 oder Arbeitskopfes 2.

Wie zu erkennen ist, erstreckt sich somit in der ersten Arbeitsteilung gemäß der **Figuren 1a** **bis c** in der sich der Ausleger am 3 in einer quer zur Fahrtrichtung 10 des Trägerfahrzeuges 100 verlaufenden, aufrecht stehenden Querebene 11' befindet bzw. entlang dieser verläuft
- das erste Armteil 3.1 von der ersten Schwenkachse 4.1 schräg nach oben, etwa zur Befestigungsbasis 5 hin geneigt,
- das zweite Armteil 3.2 in einer teilweise ausgefahrenen Teleskopstellung, ebenso, also schräg nach oben, etwa zur Befestigungsbasis 5 hin geneigt,
- das dritte Armteil 3.3 von der dritten Schwenkachse 4.3 aus schräg nach unten etwa in Richtung der Befestigungsbasis 5 geneigt und
- das vierte Armteil 3.4 von der vierten Schwenkachse 4.4 aus schräg nach unten zur Befestigungsbasis 5 hin, mit umgekehrter Neigung gegenüber dem dritten Anteil 3.3.

Wenn sich also der Arbeitskopf 2 in Fahrtrichtung 10 rechts vom Trägerfahrzeug 100 befindet, ragt das vierte Armteil 3.4 von seiner Befestigung an der Befestigungsbasis 5 aus, nach links oben, während das dritte Armteil 3.3 mit seinem freien äußeren Ende nach rechts oben weist. Das zweite Armteil 3.2 weist mit seinem vorderen, äußeren Ende nach rechts außen unten, und das erste Armteil 3.1 weist mit seinem freien unteren Ende nach unten rechts außen.

**Figur 1a** zeigt auch, dass die Schwenkachsen 4.1 - 4.4 parallel zueinander verlaufen und bei einem sich in Querrichtung 11 zur Seite erstreckenden Auslegerarm 3 und Armebene 3' etwa in Fahrtrichtung 10 verlaufen.

**Figur 1a** zeigt ferner, dass sich in dieser Arbeitsstellung der Auslegerarm 3, insbesondere dessen zweites Armteil 3.2, vergleichsweise weit nach oben über die Höhe des Daches der Fahrerkabine 101 hinaus erstreckt, und diese Erstreckung nach oben ist umso größer, je näher sich der Arbeitskopf 2 am Trägerfahrzeug 100 und damit der Befestigungsbasis 5 des Auslegerarmes 3 befindet, und je stärker der teleskopierbare zweite Armteil 3.2 sich in der ausgefahrenen Stellung befindet.

In dieser Arbeitsstellung befindet sich der Schiebeschuh 14, also die Befestigungsbasis 5, in Querrichtung 11 etwa in der Mitte der Versatzschiene 13, also etwa in der Mitte der Breite des Trägerfahrzeuges 100.

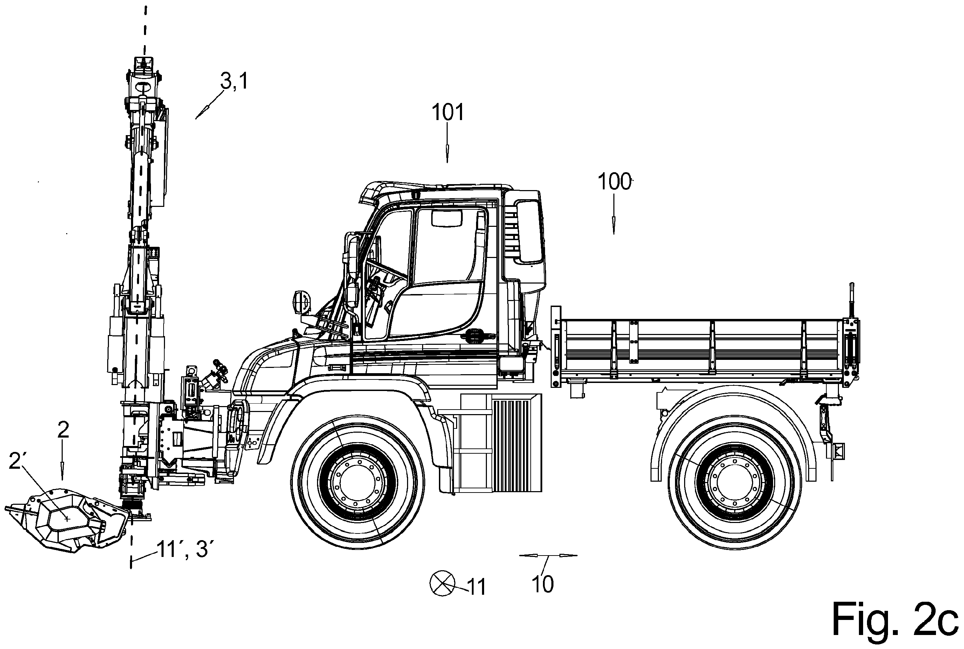

Die **Figuren 2a****,** **b****,** **c** zeigen demgegenüber eine zweite Arbeitsstellung, in der der seitliche, in Querrichtung 11 gemessene, Abstand des Arbeitskopfes 2 zu der Befestigungsbasis 5, also dem Schiebeschuh 14, größer ist als bei der ersten Arbeitsstellung gemäß der Figuren 1a, b, c:
Die vor allem in **Figur 2a** ersichtliche Anordnung und Verlaufsrichtung der Armteile ist dabei prinzipiell die gleiche wie in **Figur 1a****,** jedoch ist von den Zwischenwinkeln 7.1 bis 7.3 zwischen den Abschnitten des Polygonzuges 9 um die zweite, dritte und vierte Schwenkachse 4.2, 4.3 und 4.4 herum vor allem der Zwischenwinkel 7.2, also zwischen dem zweiten Armteil 3.2 und dem dritten Armteil 3.3 größer, dagegen der Zwischenwinkel 7.3 zwischen dem dritten Armteil 3.3 und dem vierten Armteil 3.4 geringer als bei der ersten Arbeitsstellung gemäß der Figuren 1a, b, c.

Die Teleskopstellung des teleskopierbaren zweiten Armteiles 3.2 ist in **Figur 2a** etwa die gleiche wie in der ersten Arbeitsstellung der Figur 1a.

In **Figur 2a** wird ferner deutlich, dass der Querfortsatz 3.2a des zweiten Armteiles 3.2 in dieser Arbeitsstellung in Querrichtung 11 ausreichend Raum schafft für das Übergreifen eines Hindernisses, wie eventuell eines Verkehrsschildes 99, ohne dass der Auslegerarm 3 zu weit über dieses Hindernis hinaus nach oben ragen muss. Wegen des flacheren Anstieges des dritten Armteiles 3.3 ragt der Auslegerarm 3 in dieser Arbeitsstellung weniger weit nach oben als in der ersten Arbeitsstellung der Figuren 1a - c mit dem geringeren Seitenabstand zwischen Arbeitskopf 2 und Befestigungsbasis 5.

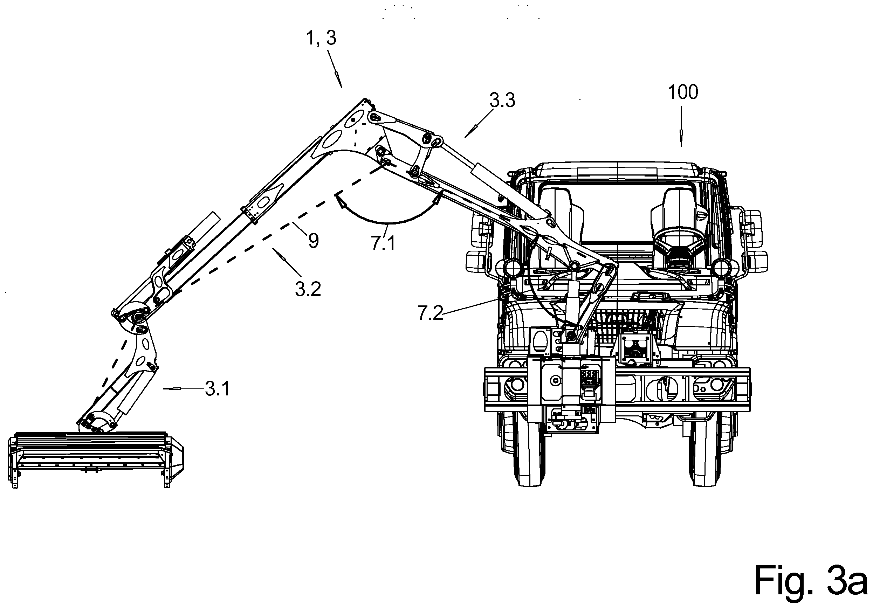

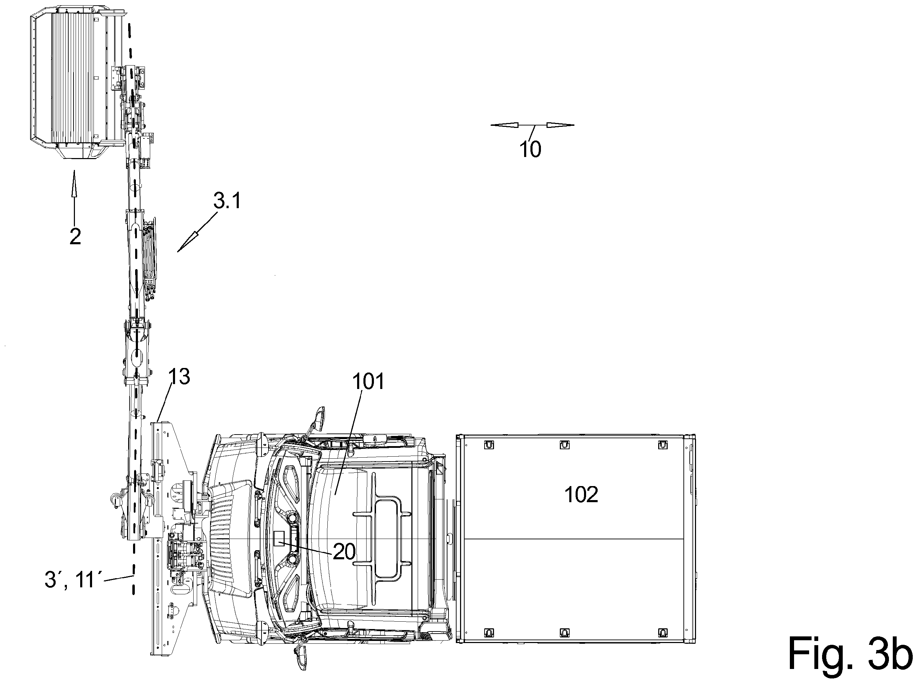

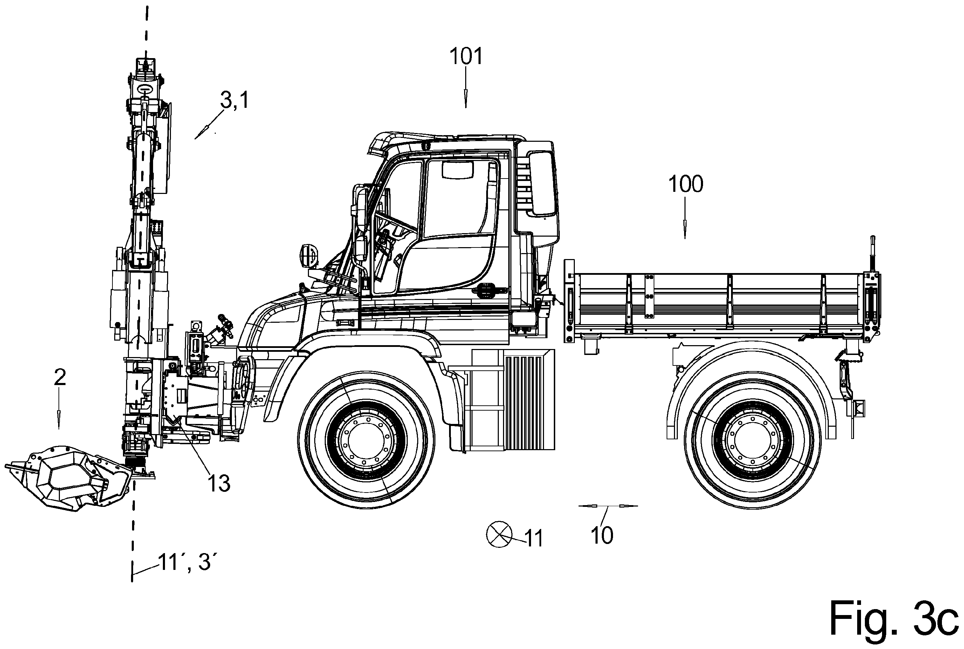

Die **Figuren 3a** **- c** zeigen eine dritte Arbeitsstellung mit einem noch größeren seitlichen Abstand zwischen dem Arbeitskopf 2 und der Befestigungsbasis 5 in Querrichtung 11:
Die Verlaufsrichtungen der einzelnen Armteile sind prinzipiell die gleichen wie in der ersten und zweiten dargestellten Arbeitsstellung, jedoch ist der Zwischenwinkel 7.1 nochmals größer, und der Zwischenwinkel 7.3 nochmals kleiner als in der zweiten Arbeitsstellung mit mittlerem Querabstand des Arbeitskopfes 2 gemäß der Figuren 2a - c.

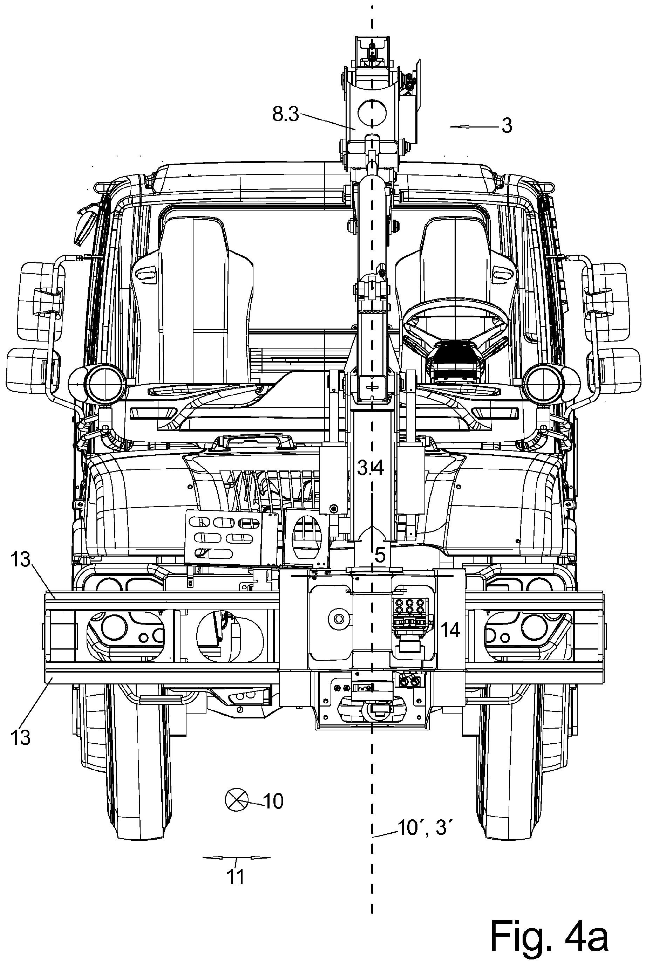

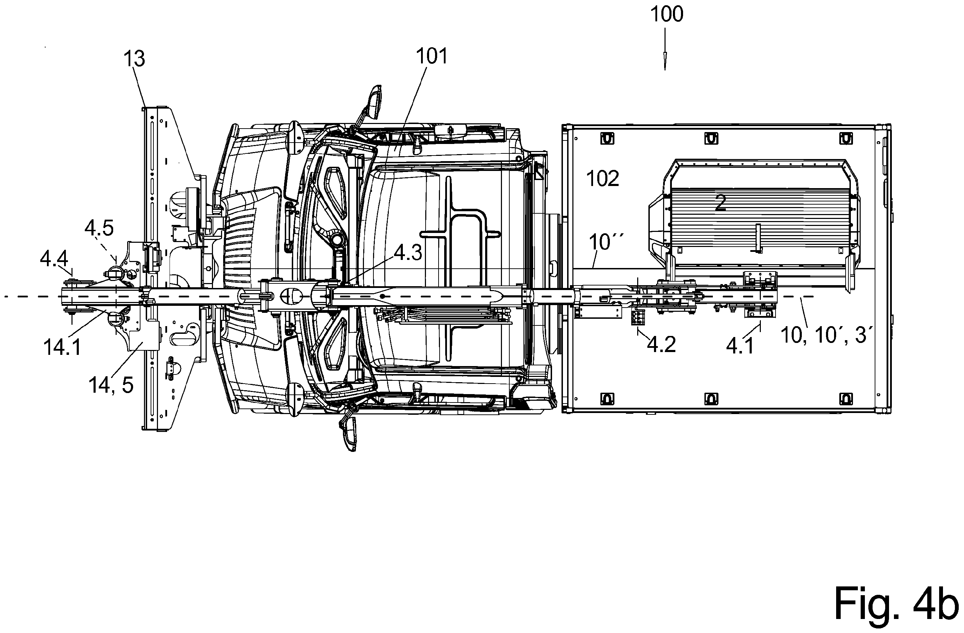

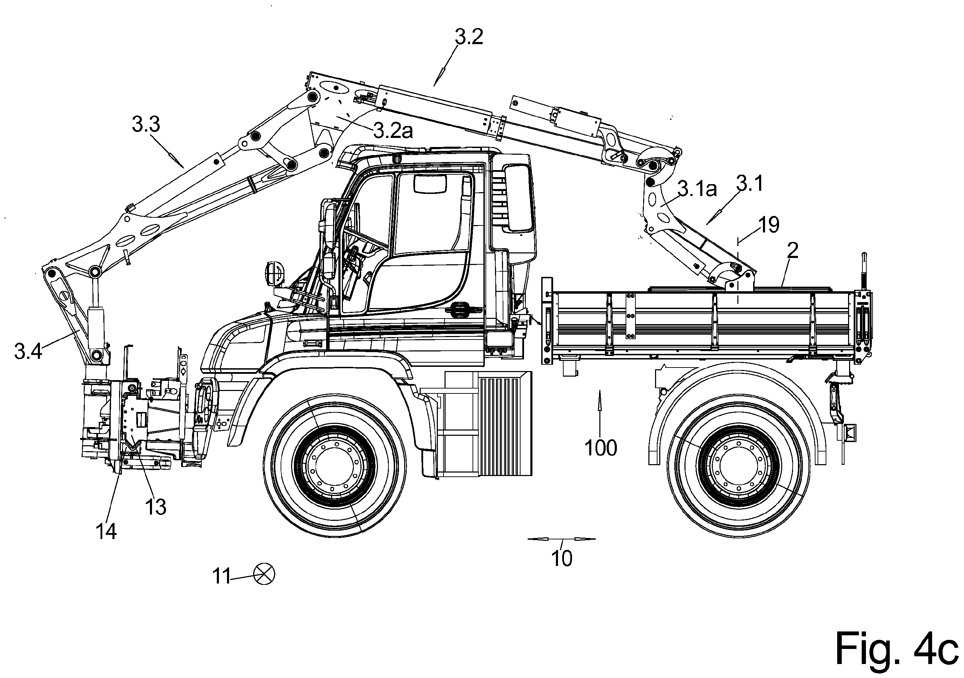

Die Figuren **4a** - c zeigen eine erste Transportstellung des Arbeitsgerätes 3:
Wie die Seitenansicht der Figur 4c zeigt, erstreckt sich dabei der Auslegerarm 3, wie auch die Figuren 4a, b erkennen lassen, mit seiner Armebene 3' entlang einer in Fahrtrichtung 10 verlaufenden, aufrecht stehenden, insbesondere vertikal stehenden, Längsebene 10' , wobei der Auslegerarm 3 von der Befestigungsbasis 5, also dem Schiebeschuh 14, über die Fahrerkabine 101 des Trägerfahrzeuges 100 hinweg verläuft in Richtung der Ladefläche 102 hinter der Fahrerkabine 101, auf der der Arbeitskopf 2 abgelegt ist.

Da sich der Arbeitskopf 2 gemäß **Figur 4b** seitlich versetzt zu der Armebene 3' befindet, muss hierfür ausreichend Platz auf der Ladefläche 102 des Trägerfahrzeuges 100 zur Verfügung stehen. Vorliegend verläuft der Auslegerarm 3 nicht entlang der Fahrzeugmitte, sondern seitlich nach in diesem Fall links versetzt, jedoch ist dies - abhängig von den Dimensionen des Arbeitskopfes 2 - nicht immer notwendig. Im Gegenteil wird versucht, in dieser Transportstellung den Auslegerarm 3 entlang der Fahrzeug-Mitte verlaufen zu lassen, um die Sicht für den auf der linken Seite in der Fahrerkabine 101 sitzenden Fahrers nicht zu behindern.

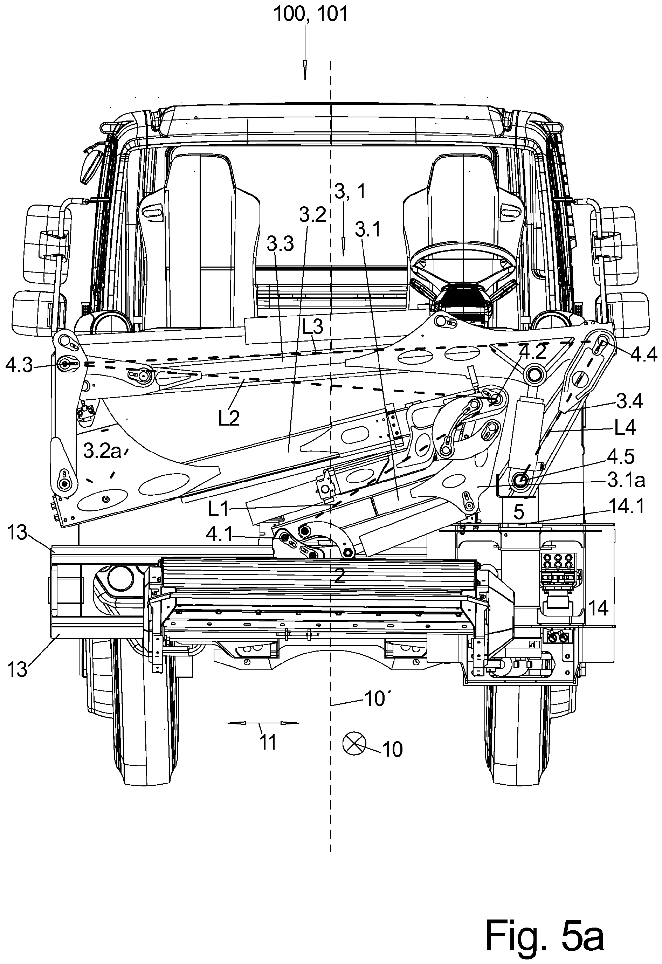

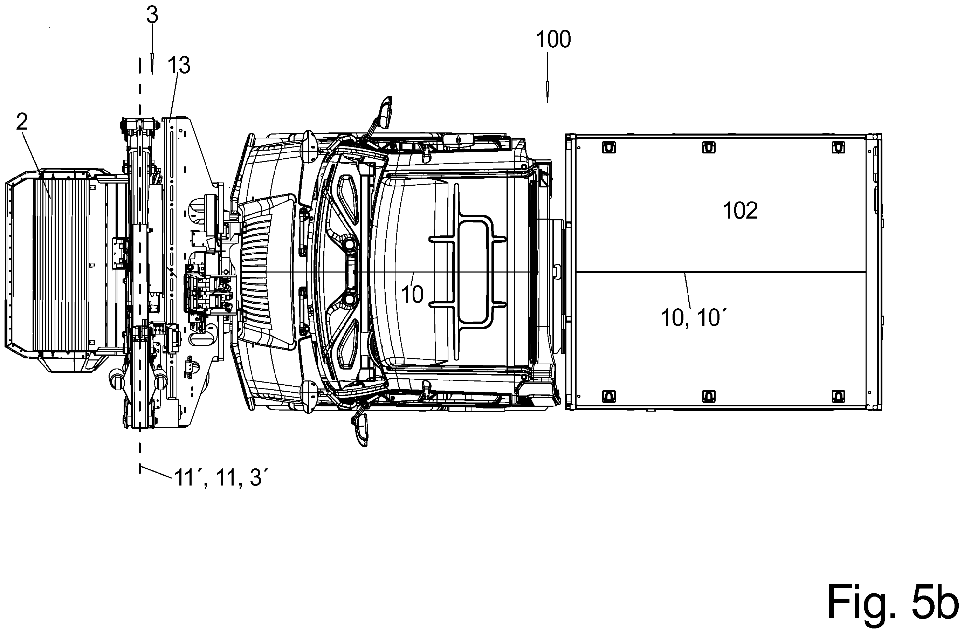

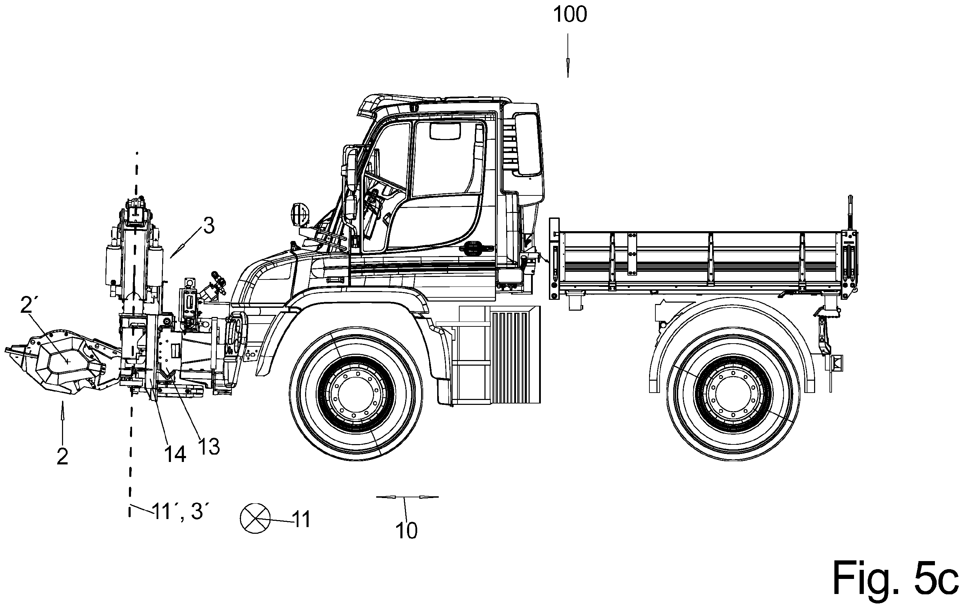

Die **Figuren 5a** **- c** zeigen eine zweite Transportstellung des Arbeitsgerätes 1 und insbesondere dessen Auslegerarmes 3, und zwar indem der Auslegerarm 3 in seiner Armebene 3' in einer aufrecht stehenden, insbesondere vertikal stehenden, Querebene 11' - siehe **Figur 5b** **-** vor der Front des Trägerfahrzeuges 100 zusammengeklappt ist.

Der Arbeitskopf 2, insbesondere Mähkopf 2, befindet sich dabei in Fahrtrichtung 10 betrachtet vor dem zusammengefalteten Auslegerarm 3 und der entsprechenden Querebene 11'.

Wie am besten die Frontansicht der **Figur 5a** zeigt, ist dabei der Arbeitskopf 2 in Querrichtung 11 etwa in der Mitte vor der Fahrzeugfront und damit auch etwa in Querrichtung 11 in der Mitte vor der Versatzschiene 13 gehalten und insbesondere für den Transport an dieser fixiert, insbesondere eingehängt in einer nicht dargestellten Halterung.

Etwa in der Mitte der Haupt-Erstreckungsrichtung 2' des Arbeitskopfes 2 greift das erste Armteil 3.1 an diesem an, und erstreckt sich von dort - bei einem links gesteuerten Trägerfahrzeug 100, also bei einem Arbeitsgerät 1 vorgesehen für Straßen mit Rechtsverkehr - nach schräg oben in Richtung der Befestigungsbasis 5 oder der fünften Schwenkachse 4.5, die an der Befestigungsbasis 5, einem vom Schiebeschuh 14 nach oben aufragenden Befestigungs-Fortsatz 18, angeordnet ist.

In dieser Stellung ragt der Querfortsatz 3.1a am hinteren Ende des ersten Armteiles 3.1 stärker nach oben, sodass das daran an der zweiten Schwenkachse 4.2 befestigte zweite Armteil 3.2 sich - etwa parallel zum geraden Hauptschenkel des ersten Armteiles 3.1 - etwas schräg geneigt nach rechts unten erstrecken kann.

Der bezüglich der Befestigungsbasis 5 des gesamten Auslegerarmes am inneren Ende des zweiten Armteiles 3.2 vorhandene Querfortsatz 3.2a ragt dabei von der Haupt-Erstreckungsrichtung des schräg nach unten verlaufenden Hauptschenkels des zweiten Armteiles 3.2 nach oben.

Dadurch kann an der in seinem hier oberen Endbereich angeordneten dritten Schwenksachse 4.3 das dritte Armteil 3.3 angreifen und sich etwa horizontal von der rechten zur linken Seite vor dem Trägerfahrzeug 100 erstrecken.

An dem inneren Ende des dritten Armteiles 3.3 ist über die dortige Schwenkachse 4.4 das vierte Armteil 3.4 befestigt, welches sich in dieser Transportstellung steil nach unten, in Richtung Mitte der Versatzschiene 13 und der Befestigungsbasis 5 erstreckt, die sich ebenfalls näher an der vertikalen Längsmittelebene 10" befindet als die vierte Schwenkachse 4.4.

Wie zu erkennen, befindet sich hierfür der Schiebeschuh 14 in einer weit, insbesondere maximal weit, nach links außen entlang der Versatzschiene 13 verfahrenen Position.

Dadurch kann sich der im Wesentlichen aufrecht stehende vierte Armteil 3.4 links neben der Schwenkachse 4.2 zwischen dem ersten und zweiten Armteil 3.1, 3.2 vorbei nach oben erstrecken.

Auf diese Art und Weise ergibt sich eine sehr kompakte zweite Transportstellung, wobei ersichtlich wird, dass unter anderem die Quer-Fortsätze 3.1a und 3.2a zu dieser sehr kompakten Anordnung durch einen möglichst parallelen Verlauf der Hauptschenkel dieser beiden Armteile 3.1, 3.2 beitragen.

Die Breite des Arbeitsgerätes 1 in dieser zweiten Transportstellung vor der Front des Trägerfahrzeuges 100 wird, wie ersichtlich, ganz wesentlich bestimmt durch die Länge des dritten Armteiles 3.3, die somit begrenzt ist durch die Breite des Trägerfahrzeuges 100 und die darüber hinaus zulässigen seitlichen Überstände.

Sowohl für die einzelnen Arbeitsstellungen als auch für die einzelnen Transportstellungen und sämtliche Zwischenstellungen werden alle beweglichen Komponenten des Arbeitsgerätes 1 von einer zentralen Steuerung 20 gesteuert.

### BEZUGSZEICHENLISTE

- 1: Arbeitsgerät, Mähgerät
- 2: Arbeitskopf, Mähkopf
- 2': Haupt-Erstreckungsrichtung
- 3: Auslegerarm
- 3': Armebene
- 3.1 - 3.4: Arm-Teil
- 3.1a, 3.2a: Quer-Fortsatz
- 4.1,4.2,4.3: Gelenk, Schwenkachse
- 5: Befestigungsbasis
- 6.1, 6.2, 6.3: Arbeits-Zylinder, Hydraulik-Zylinder
- 7.1, 7.2, 7.3: Zwischenwinkel
- 8.1, 8.2, 8.3: Umlenkhebel
- 9: Polygonzug
- 10: Fahrtrichtung
- 10': Längsebene
- 10": Längsmittelebene
- 11: Querrichtung
- 11': Querebene
- 12: Vertikale
- 13: Versatzschiene
- 14: Arm-Schiebeschuh
- 15: Kopf-Schiebeschuh
- 16: Kopf-Führung
- 17: aufrechte Achse
- 18: Befestigungs-Fortsatz
- 19: Kopf-Achse
- 20: Steuerung

- 99: Verkehrsschild
- 100: Träger-Fahrzeug
- 101: Fahrerkabine
- 102: Ladefläche

- L1 - L4: Länge

## Patentansprüche

1. **Auslegerarm** (3) zum Tragen eines Arbeitskopfes (2) an seinem äußeren Ende und Befestigen seines inneren Endes an einer Befestigungs-Basis (5), insbesondere einem Träger-Fahrzeug (100), wobei
- der Auslegerarm (3) mindestens drei gelenkig miteinander verbundene Arm-Teile (3.1, 3.2, 3.3) umfasst, wobei insbesondere deren Zwischenwinkel (7.1, 7.2) zwischen benachbarten Armteilen mittels Stellelementen einstellbar ist, nämlich
- einen äußersten, ersten Arm-Teil (3.1),
- einen daran befestigten zweiten Arm-Teil (3.2),
- einen am zweiten Arm-Teil (3.2) befestigten dritten Arm-Teil (3.3),
**dadurch gekennzeichnet, dass**
- von diesen drei Arm-Teilen (3.1, 3.2, 3.3) zumindest der dritte Arm-Teil (3.3), insbesondere der zweite Arm-Teil (3.2) und der dritte Arm-Teil (3.3), in ihrer Gelenk-Abstandsrichtung eine größere Länge (L3, L2) besitzen als die Länge (L1) des ersten Arm-Teiles (3.1) in seiner Gelenk-Abstandsrichtung,
- und dies im Fall eines oder mehrerer teleskopierbarer Arm-Teile (3.2) für deren eingefahrene Teleskop-Stellungen gilt.

2. Auslegerarm nach Anspruch 1,
**dadurch gekennzeichnet, dass**
- jeweils gemessen in deren Gelenk-Abstandsrichtung der dritte Arm-Teil (3.3) die größte und der erste Arm-Teil (3.1) die geringste Länge aufweist
und/oder
- wenigstens der zweite Arm-Teil (3.2), insbesondere nur der der zweite Arm-Teil (3.2), in einer Richtung längenveränderbar, insbesondere teleskopierbar, ist.
(vierter Arm-Teil)

3. Auslegerarm nach einem der vorhergehenden Ansprüche, **dadurch gekennzeichnet, dass**
- der Auslegerarm (3) einen, insbesondere unmittelbar, am dritten Arm-Teil (3.3) befestigten vierten Arm-Teil (3.4) umfasst,
- insbesondere der vierte Arm-Teil (3.4) eine geringere Länge (L4) aufweist als die Länge (L3) des dritten Arm-Teiles (3.3), insbesondere auch geringer ist als die Länge (L2) des zweiten Arm-Teiles (3.2), und der dritte Arm-Teil (3.3) insbesondere auch eine geringere Länge (L3) aufweist als die Länge (L1) des ersten Arm-Teiles (3.1), jeweils gemessen in deren Gelenk-Abstandsrichtung.

4. Auslegerarm nach einem der vorhergehenden Ansprüche, wobei
- das Verschwenken zweier benachbarter, zueinander um eine Schwenkachse (4.1, 4.2) beweglicher, Arm-Teile (3.1, 3.2, 3.3) bewirkt wird mittels wenigstens je eines Arbeits-Zylinders (6.1, 6.2), insbesondere Hydraulik-Zylinders (6.1, 6.2), als Stellelement, der mit seinem einen Ende exzentrisch zur Schwenkachse (4.1, 4.2) an einem der beiden Arm-Teile (3.1, 3.2, 3.3) angreift,
**dadurch gekennzeichnet, dass**
- die jeweiligen Arbeits-Zylinder (6.1, 6.2) bezüglich desjenigen weder beiden Zwischenwinkeln (7.1, 7.2, 7.3) zwischen den Arm-Teilen (3.1, 3.2, 3.3), der den kleineren Winkel einnehmen kann, auf der Außenseite eines der zwei benachbarter Arm-Teilen (3.1, 3.2, 3.3) angeordnet ist.

5. Auslegerarm nach einem der vorhergehenden Ansprüche, **dadurch gekennzeichnet, dass**
der den dritten Arm-Teil (3.3) relativ zum vierten Arm-Teil (3.4) verschwenkende Arbeits-Zylinder (6.4) an der Schwenkachse (4.5) zwischen dem vierten Arm-Teil (3.4) und der Befestigungsbasis (5) für den Auslegerarm (3) angreift.
(Quer-Transportstellung)

6. Auslegerarm nach einem der vorhergehenden Ansprüche, wobei
- der Auslegerarm (3), insbesondere hinsichtlich der Anordnung und/oder Ausrichtung seiner Gelenke, insbesondere Schwenkachsen (4.1, 4.2, 4.3), und/oder Arbeit-Zylinder (6.1, 6.2, 6.3), so ausgestaltet ist, dass der Auslegerarm (3) in eine kompakte Transportstellung zusammengefaltet werden kann, in der die Arm-Teile (3.1, 3.2, 3.3), insbesondere alle Arm-Teile (3.1, 3.2, 3.3), parallel oder entlang einer Armebene (3') liegen,
**dadurch gekennzeichnet, dass**
- der erste, zweite und dritte Arm-Teil (3.1, 3.2, 3.3) im Wesentlichen parallel zueinander und in dieser Reihenfolge übereinander und im Wesentlichen horizontal verlaufend angeordnet sind und der gegebenenfalls vorhandene vierte Arm-Teil (3.4) im Wesentlichen aufrecht stehend angeordnet ist.
(Gekröpftes Armteil)

7. Auslegerarm (3) zum Tragen eines Arbeitskopfes (2) an seinem äußeren Ende und Befestigen mit seinem inneren Ende an einer Befestigungs-Basis (5), insbesondere einem Träger-Fahrzeug (100), insbesondere nach einem der vorhergehenden Ansprüche, wobei
- der Auslegerarm (3) mehrere, vorzugsweise mindestens drei, gelenkig miteinander verbundene Arm-Teile (3.1, 3.2, 3.3) umfasst, wobei insbesondere deren Zwischenwinkel (7.1, 7.2) zwischen benachbarten Armteilen mittels Stellelementen einstellbar ist,
**dadurch gekennzeichnet, dass**
- mindestens eines der Arm-Teile (3.1, 3.2) an einem Ende einen quer zu seiner Haupt-Erstreckungsrichtung von dessen Hauptstrebe abstrebenden Querfortsatz (3.1 a, 3.2a) aufweist, in dessen freien Endbereich das Gelenk (4.1, 4.2), insbesondere die Schwenkachse (4.1, 4.2), zum Befestigen des benachbarten Arm-Teiles (3.2, 3.1) angeordnet ist.

8. Auslegerarm nach Anspruch 7,
**dadurch gekennzeichnet, dass**
- entweder das zweite Arm-Teil (3.2) an seinem inneren Ende oder das dritte Arm-Teil (3.3) an seinem äußeren Ende einen Querfortsatz (3.2a) aufweist, insbesondere Ersteres, und
- insbesondere der Querfortsatz (3.2a) von der Verlaufsrichtung der Hauptstrebe das zweiten Arm-Teiles (3.2) in Richtung desjenigen der beiden einander zu 360° ergänzenden Zwischenwinkel (7.2) zwischen den Arm-Teilen (3.2, 3.3), der den kleineren Winkel einnehmen kann, hineinragt.

9. Auslegerarm nach Anspruch 7 oder 8,
**dadurch gekennzeichnet, dass**
- entweder das erste Arm-Teil (3.1) an seinem inneren Ende oder das zweite Arm-Teil (3.2) an seinem äußeren Ende einen Querfortsatz (3.1 a) aufweist, insbesondere Ersteres, und
- insbesondere der Querfortsatz (3.1 a) des ersten Arm-Teiles (3.1) zu demjenigen der beiden einander zu 360° ergänzenden Zwischenwinkel (7.1) zwischen den Arm-Teilen (3.1, 3.2), der den kleineren Winkel einnehmen kann, hin gerichtet ist.

10. **Auslegerarm-Arbeitsgerät** (1), insbesondere Auslegerarm-Mähgerät (1), umfassend
- eine Befestigungsbasis (5) zum Anordnen an einem Träger-Fahrzeug (100),
- einen an der Befestigungsbasis (5) mit seinem inneren Ende beweglich befestigten Auslegerarm (3),
- einem am äußeren Ende des Auslegerarmes (3) befestigten Arbeitskopf (2), insbesondere Mähkopf (2),
**dadurch gekennzeichnet, dass**
der Auslegerarm (3) nach einem der vorhergehenden Ansprüche ausgebildet ist.
